# EUROPÄISCHE PATENTANMELDUNG

(11) **EP 4 566 802 A1**
(43) Veröffentlichungstag der Anmeldung: **11.06.2025**
(21) Anmeldenummer: 24218040.4
(22) Anmeldetag: 06.12.2024
(51) Int. Cl.: B29D 11/00, G02B 13/00, G02B 27/00

(54) **VERFAHREN ZUR HERSTELLUNG EINER MIKROOPTIK**

(30) Priorität: 06.12.2023 DE 102023134117
(71) Anmelder: Printoptix GmbH, 70569 Stuttgart (DE)
(72) Erfinder: Thiele, Simon, 70372 Stuttgart (DE); Fahrbach, Nils, 70374 Stuttgart (DE); Hartlieb, Simon, 73728 Esslingen (DE); Schmid, Michael, 72555 Metzingen (DE)
(74) Vertreter: dompatent von Kreisler Selting Werner - Partnerschaft von Patent- und Rechtsanwälten mbB

(57) **Zusammenfassung**

Verfahren zur Herstellung einer Mikrooptik mit den Schritten:
Erzeugen mindestens einer optischen Komponente,
Erzeugen einer die mindestens eine optische Komponente zumindest teilweise umgebende Gitterstruktur einer Stützstruktur,
Füllen der Gitterstruktur mit einem härtbaren Polymer und
Aushärten des Polymers in der Gitterstruktur zur Erzeugung der Stützstruktur.

## Beschreibung

Die vorliegende Erfindung betrifft ein Verfahren zur Herstellung einer Mikrooptik sowie eine solchen Mikrooptik.

Bei bekannten Mikrooptiken ist es erforderlich, dass die optischen Baugruppen bestehend aus mehreren optischen Elementen in einem definierten Abstand und mit einer definierten Orientierung zueinander stehen. Hierzu ist es bekannt massive Haltestrukturen oder Stützstrukturen vorzusehen, welche die optischen Elemente hülsenförmig umgeben. Insbesondere wenn sowohl die optischen Baugruppen, als auch die Haltestrukturen mittels 3D Laserschreibens erzeugt werden sollen, wie es bei monolithischen Mikrooptiken aus dem Stand der Technik der Fall ist, erfordern insbesondere die Haltestrukturen jedoch einen erheblichen Zeitaufwand. Weiterhin findet das 3D Laserschreiben in der Flüssigphase statt, wobei ein Fotolack insbesondere mittels 2-Photonen-Polymerisation am Ort des Voxels ausgehärtet wird. Somit muss nach dem Druck trotz umschließender Hülle der Haltestruktur überschüssiger Fotolack, welcher im Schreibprozess nicht ausgehärtet wurde, aus den Zwischenräumen zwischen den optischen Elementen abfließen bzw. herausgewaschen werden. Somit müssen Öffnungen vorgesehen werden, die das Design der Haltstruktur komplex werden lässt und insbesondere für unterschiedliche Mikrooptiken stets anzupassen ist.

Weiterhin ist es gewünscht, dass die optischen Elemente durch eine lichtundurchlässige Hülse umgeben sind, welche insbesondere in die Haltestruktur integriert werden soll. EP 3 162 549 A1 beschreibt hierbei ein Verfahren, bei dem im Bereich der Haltestruktur spaltförmige Kavitäten vorgesehen sind, die nach dem Druck mit einer absorbierenden Flüssigkeit befüllt werden, welche anschließend aushärtet. Hieraus ergibt sich eine komplexe Haltestruktur, deren Erstellung und Erzeugung zeitaufwändig ist und häufig Beschränkungen hinsichtlich der Positionierung und Anzahl der verwendbaren optischen Elemente nach sich zieht.

Aufgabe der vorliegenden Erfindung ist es eine Mikrooptik zu schaffen mit einer Haltestruktur, die einfacher ausgebildet ist und schneller erzeugt werden kann.

Die Aufgabe wird gelöst durch ein Verfahren gemäß Anspruch 1 sowie eine Mikrooptik gemäß Anspruch 16.

Das Verfahren gemäß der vorliegenden Erfindung zur Herstellung einer Mikrooptik weist die Schritte auf:
Erzeugen ein oder mehrerer optischer Bauelemente,
Erzeugen einer das eine die mehreren optischen Bauelemente zumindest teilweise umgebende Gitterstruktur einer Stützstruktur,
Füllen der Gitterstruktur mit einem härtbaren Polymer und
Aushärten des Polymers in der Gitterstruktur zur Erzeugung der Stützstruktur.

Hierbei können insbesondere das ein oder die mehreren optischen Bauelemente, welches insbesondere massiv ausgebildet sind, und die Stützstruktur gleichzeitig in einem Schritt erzeugt werden. Dabei können durch die massiv erzeugten optischen Bauelemente die optischen Eigenschaften der Mikrooptik bereitgestellt werden. Die umgebene Stützstruktur ordnet das eine oder die mehreren optischen Bauelemente in einem definierten Abstand und einer definierten Orientierung zueinander fest an. Dabei kann die Stützstruktur aufgrund ihrer Gitterstruktur schneller geschrieben werden, da gerade keine massive Stützstruktur erforderlich ist. Vielmehr besteht die Stützstruktur aus der Gitterstruktur und dem in der Gitterstruktur ausgehärteten Polymer. Hierdurch kann erhebliche Zeit eingespart werden. Aufgrund der Ausbildung der Stützstruktur mittels der Gitterstruktur kann der Fotolack, welcher zur Erstellung der Gitterstruktur und der optischen Bauelemente erforderlich ist, aus inneren Hohlräumen der Mikrooptik auf einfacher Weise abfließen bzw. herausgewaschen werden. Das Vorsehen zusätzlicher Öffnungen in der Stützstruktur ist hierbei nicht erforderlich. Die Stützstruktur kann somit weniger komplex ausgebildet sein und eine evtl. erforderliche Anpassung an unterschiedliche Mikrooptiken wird vereinfacht.

Vorzugsweise umgibt die Stützstruktur die ein oder mehreren optischen Bauelemente vollständig und insbesondere hülsenförmig. So wird durch die Stützstruktur eine im Wesentlichen zylindrische Form der Mikrooptik definiert.

Vorzugsweise handelt es sich bei den optischen Elementen beispielsweise um Linsen, Prismen, Gitter, Spiegel oder dergleichen. Insbesondere können mehr als eine optische Komponente und vorzugsweise eine Vielzahl von optischen Komponenten in der Mikrooptik vorgesehen sein.

Vorzugsweise wird die Gitterstruktur mittels 3D-Laserschreibens erzeugt und insbesondere mittels 2-Photonen-Laserschreibens. Hierbei hat sich gezeigt, dass mittels des 3D-Laserschreibens geeignete Strukturen auf einer entsprechenden Skala geschafft werden können mit einer Genauigkeit, die erforderlich ist, um eine solche Gitterstruktur zu schaffen. Bei dem 3D-Laserschreiben wird ein Fotolack lokal mittels eines fokussierten Laserstrahls ausgehärtet zur Erzeugung der gewünschten Struktur. Somit können kleine Strukturen präzise erzeugt werden und die gewünschten Abmessungen der Strukturelemente der Gitterstruktur erreicht werden. Gleichzeitig erreicht das Verfahren des 3D-Laserschreibens eine hohe Reproduzierbarkeit, sodass zuverlässig Gitterstrukturen für Mikrooptiken erstellt werden können.

Vorzugsweise wird die gesamte Mikrooptik, also die Gitterstruktur zusammen mit den ein oder mehreren optischen Elementen mittels 3D-Laserschreibens und insbesondere mittels 2-Photonen-Laserschreibens erzeugt. Insbesondere erfolgt dies in einem Prozess, so dass die Gitterstruktur und die ein oder mehreren optischen Bauelemente einstückig bzw. stoffschlüssig ausgebildet sind.

Vorzugsweise wird die Gitterstruktur aus einem transparenten Material erzeugt. Bei dem transparenten Material handelt es sich insbesondere um ein Acrylat, ein Epoxy oder ein Glas. Hierbei bezeichnet transparent eine Eigenschaft des Material Licht im nahen UV, im sichtbaren Wellenlängenbereich und/oder nahen Infrarot im Wesentlichen zu transmittieren. Im Wesentlichen bedeutet hierbei, dass mehr als 50% des Lichts durch das Material durchtritt, bevorzugt mehr als 70%, weiter bevorzugt mehr als 90% und besonders bevorzugt mehr als 95%.

Vorzugsweise sind die Gitterstruktur und das eine oder die mehreren optischen Elemente einstückig und vorzugsweise monolithisch ausgebildet. Insbesondere ist die gesamte Mikrooptik einstückig bzw. monolithisch ausgebildet. So können Gitterstruktur und das ein oder die mehreren optischen Elemente insbesondere aus dem gleichen Material hergestellt sein.

Vorzugsweise ist die Dichte eines der optischen Bauelemente und insbesondere aller vorgesehenen optischen Bauelemente höher als die Dichte der Gitterstruktur. Da die optischen Bauelemente als massive Komponenten ausgebildet sind, ist deren Dichte im Wesentlichen gleich der allgemeinen Dichte des ausgehärteten Fotolacks, welcher zur Erzeugung der optischen Bauelemente und/oder der Gitterstruktur herangezogen wird. Die Gitterstruktur hingegen ist gerade kein massives Bauteil, sodass deren Dichte niedriger ist. Insbesondere aufgrund der verringerten Dichte der Gitterstruktur kann diese schneller geschrieben werden.

Vorzugsweise beträgt der Füllfaktor der Gitterstruktur weniger als 0.5, insbesondere weniger als 0.3 und bevorzugt weniger als 0.2 und besonders bevorzugt weniger als 0.1. Hierbei bezeichnet der Füllfaktor den Anteil des Volumens, der durch die Strukturelemente der Gitterstruktur belegt ist, am Gesamtvolumen.

Beispielsweise ist bei einem Füllfaktor von 0.5 die Hälfte des Volumens der Gitterstruktur belegt durch die Strukturelemente insbesondere gebildet aus dem Fotolack, wohingegen die zweite Hälfte der Gitterstruktur leer ist/mit dem härtbaren Polymer befüllbar/befüllt ist.

Vorzugsweise weist die Gitterstruktur eine Vielzahl miteinander verbundener offener Poren oder Einheitszellen auf. Durch die Poren oder Einheitszellen werden Mikrokavitäten, Leerstellen oder Hohlräume geschaffen. Die miteinander verbundenen offenen Poren oder Einheitszellen können dabei das härtbare Polymer aufnehmen, welches sodann ausgehärtet wird in der Gitterstruktur zur Erzeugung der Stützstruktur. Dadurch, dass die Einheitszellen/Poren offen sind und miteinander verbunden, kann das eingebrachte härtbare Polymer auf einfache Weise die Gitterstruktur durchdringen und sodann gehärtet werden. Dabei kann insbesondere die Gitterstruktur regelmäßig ausgebildet sein beispielsweise aus Einheitszellen oder stochastisch ausgebildet sein beispielsweise durch das Vorsehen offener Poren. Dabei können insbesondere stochastisch die Größe der Poren, die Form der Poren und deren Anordnung bestimmt werden.

Vorzugsweise weist die Gitterstruktur eine einheitliche Einheitszelle bzw. Porengeometrie auf. Somit wird die gesamte Gitterstruktur der Stützstruktur einer einheitlichen oder nahezu einheitlichen Gitterstruktur aufweisen, welche sich über die gesamte Stützstruktur fortsetzt. Alternativ hierzu ist die Einheitszelle bzw. Porengeometrie veränderbar insbesondere entlang einer Achse der Mikrooptik. Durch Anpassen der Einheitszelle bzw. Porengeometrie innerhalb der Gitterstruktur kann Einfluss genommen werden auf das Fließverhalten des härtbaren Polymers, sodass ein gleichmäßiges Befüllen der Gitterstruktur zur Erzeugung der Stützstruktur möglich ist. Ebenfalls kann durch eine Anpassung der Gitterstruktur die Steifigkeit der Stützstruktur in eine oder mehrere Richtungen angepasst, insbesondere erhöht werden.

Vorzugsweise beträgt eine Wandstärke der Gitterstruktur und insbesondere eine Strebe der Gitterstruktur als Strukturelement zwischen 0.5µm und 50µm und insbesondere zwischen 0.5 µm und 10 µm. Solche Strukturgrößen können besonders schnell geschrieben werden aufgrund ihres kleinen Volumens. Somit kann durch die geringe Größe der Wandstärken bzw. Strukturelemente der Gitterstruktur die erforderliche Zeit für die Erzeugung der Gitterstruktur deutlich reduziert werden.

Vorzugsweise entspricht die Wandstärke und/oder eine Strebe und/oder ein sonstiges Strukturelement der Gitterstruktur einem Voxel des 3D Laserschreibens. Somit muss im 3D Laserschreibprozess ein Strukturelement durch den Laser der 3D Laserschreibvorrichtung lediglich einmal über das entsprechende Strukturelement der Gitterstruktur verfahren werden zur Erzeugung der jeweiligen Einheitszelle bzw. Pore.

Vorzugsweise beträgt die Porengröße bzw. eine Größe der Einheitszelle zwischen 20 µm und 1500 µm und insbesondere zwischen 100 µm und 1000 µm. Somit können einzelne Poren bzw. Einheitszellen im großen Abstand zueinander platziert werden, wodurch die erforderliche Zeit zum Erzeugen der Stützstruktur weiter reduziert werden kann.

Vorzugsweise sind die Einheitszellen bzw. Poren der Gitterstruktur kartesisch angeordnet und alternativ hierzu insbesondere, sofern die Mikrooptik beispielsweise eine zylindrische Form aufweist, können die Einheitszellen bzw. Poren der Gitterstruktur radial angeordnet sein um die Mittelachse der Mikrooptik.

Vorzugsweise ist das härtbare Polymer im Wesentlichen intransparent. Hierbei bezeichnet intransparent eine Eigenschaft des Materials Licht im nahen UV, im sichtbaren Wellenlängenbereich und/oder nahen Infrarot im Wesentlichen nicht zu transmittieren, sondern zu absorbieren oder reflektieren. Im Wesentlichen bedeutet hierbei, dass weniger als 50% des Lichts durch das Material durchtritt, bevorzugt weniger als 20%, weiter bevorzugt weniger als 10% und besonders bevorzugt weniger als 5%. Somit kann das eingefüllte härtbare Polymer ebenfalls herangezogen werden als lichtundurchlässige Hülse. Das härtbare Polymer ist somit einerseits Bestandteil der Stützstruktur zusammen mit der Gitterstruktur, andererseits dient es ebenfalls als Schutz vor seitlich eindringendem Streulicht zur Verbesserung der Abbildungseigenschafften der Mikrooptik.

Vorzugsweise ist das härtbare Polymer UV-härtbar durch Beleuchtung mit UV-Licht, wärmehärtbar durch Anwendung von Wärme, härtbar mittels einem Initiator insbesondere in Form eines Zwei-Komponenten-Polymers, oder härtbar durch Trocknung.

Vorzugsweise sind die Einheitszellen bzw. Poren miteinander/ineinander verschachtelt oder versetzt zueinander angeordnet.

Vorzugsweise sind die Einheitszellen bzw. Poren kubisch, kreisförmig, gerundet oder polyedrisch ausgebildet. Insbesondere können die Einheitszellen bzw. Poren jede beliebige Form annehmen, die einerseits eine ausreichende Stabilität der Gitterstruktur zum Befüllen mit härtbarem Polymer bereitstellen und andererseits eine geringe Dichte aufweisen, sodass eine Erzeugung der Gitterstruktur insbesondere mittels 3D Laserschreibens besonders schnell möglich ist. So kann beispielsweise die Gitterstruktur auch schwammförmig sein oder als Gyroid ausgebildet sein.

Vorzugsweise ist mindestens eine Seite einer der Einheitszellen bzw. Poren als geschlossene Fläche ausgebildet. Hierbei ist die geschlossene Fläche insbesondere in Richtung der Lichtausbreitung oder senkrecht dazu angeordnet. Da somit eine Vielzahl von Grenzflächen innerhalb der Stützstruktur geschaffen werden, ist eine Lichtausbreitung entlang dieser Richtung nicht oder nur schwer möglich, sodass ebenfalls bereits eine lichtabschirmende Funktion der Stützstruktur bereitgestellt wird.

Vorzugsweise werden vor dem Befüllen mit dem härtbaren Polymer Metallpartikel oder andere funktionale Materialien in die Gitterstruktur eingefüllt. Hierdurch können zusätzliche Funktionen einerseits der Haltestruktur andererseits der Mikrooptik selbst bereitgestellt werden. Alternativ hierzu enthält das härtbare Polymer Metallpartikel, wobei durch die Metallpartikel insbesondere die Intransparenz des härtbaren Polymers bereitgestellt werden kann.

Vorzugsweise wird in einem Schritt vor dem Füllen der Gitterstruktur mit dem härtbaren Polymer Fotolack, welche in dem 3D Laserschreibprozess erforderlich ist, aus Innenhohlräumen der Mikrooptik herausgewaschen. Dabei kann der Fotolack insbesondere durch die offenen Poren bzw. Einheitszellen der Gitterstruktur herausgewaschen werden, ohne dass weitere Öffnungen in der Stützstruktur vorgesehen sein müssen.

In einem weiteren Aspekt wird eine Mikrooptik mit mindestens einem optischen Element und insbesondere einer Vielzahl optischen Elemente bereitgestellt, wobei die Mikrooptik hergestellt ist nach einem Verfahren wie vorstehend bezeichnet.

Nachfolgend wird die Erfindung anhand bevorzugter Ausführungsformen unter Bezugnahme auf die beigefügten Figuren näher erläutert.

Die Figuren zeigen:
Figuren 1A-1C schematischer Ablauf des Verfahrens gemäß der vorliegenden Erfindung,
Figuren 2A, 2B eine schematische Schnittansicht der Mikrooptik gemäß der vorliegenden Erfindung in unterschiedlichen Stadien der Herstellung, Figuren 3A-3H unterschiedliche Beispiele für die Gitterstruktur,
Figuren 4A-4C eine Detailansicht unterschiedlicher Gitterstrukturen gemäß der vorliegenden Erfindung und
Figur 5 ein Flussdiagramm für das Verfahren gemäß der vorliegenden Erfindung.

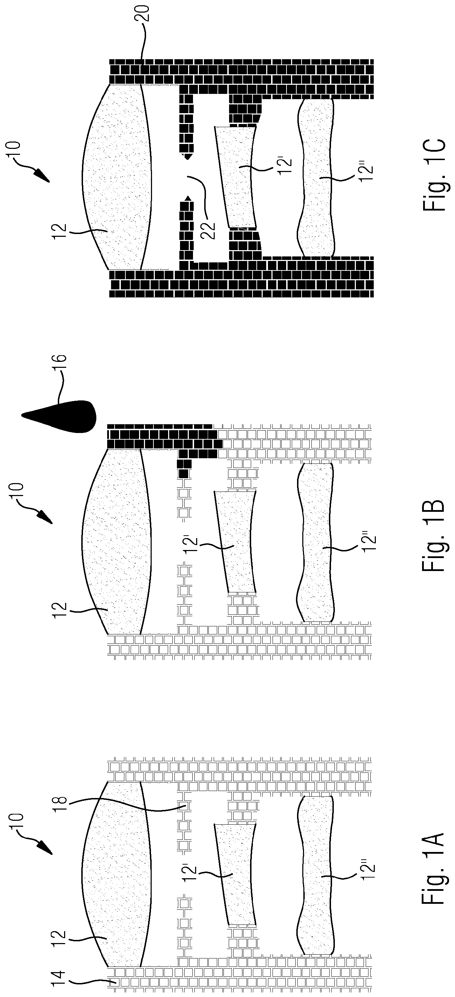

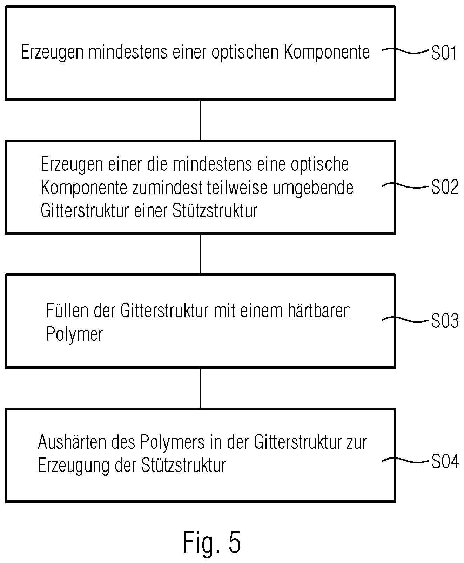

Im Folgenden wird Bezug genommen auf die Figur 1 und die Figur 5. In dem erfindungsgemäßen Verfahren wird im Schritt S01 mindestens ein optisches Bauelement 12,12',12" erzeugt. Das optische Bauelement ist dabei insbesondere massiv ausgebildet. In den Figuren 1A-1C weist die Mikrooptik 10 drei optische Bauelemente 12, 12', 12" auf, welche exemplarisch dargestellt sind als Linse 12, Prisma 12' und Freiformelement 12". Die vorliegende Erfindung ist selbstverständlich nicht auf die dargestellten optischen Bauelemente beschränkt. Weitere optische Bauelemente, andere optische Elemente oder sogar weniger optische Elemente können vorgesehen sein in der Mikrooptik 10 im Rahmen der vorliegenden Erfindung. Gleichzeitig mit der Erzeugung des mindestens einen optischen Bauelements 12 oder nachfolgend wird eine das optische Bauelement 12 zumindest teilweise und insbesondere vollständig umgebende Gitterstruktur 14 im Schritt S02 erzeugt. Die Gitterstruktur umgibt dabei die optischen Bauelemente 12 insbesondere hülsenförmig und fixiert die optischen Bauelemente 12, 12' und 12" in ihrer Position und ihrer Orientierung zueinander. Die Gitterstruktur 14 weist dabei eine Vielzahl von offenen Poren oder Einheitszellen auf, die miteinander verbunden sind. Durch die Poren oder Einheitszellen werden Mikrokavitäten, Leerstellen oder Hohlräume erzeugt. Die Anordnung der Poren oder Einheitszellen kann dabei regelmäßig in der Gitterstruktur 14 erfolgen oder stochastisch ausgebildet sein. Die Größe der Poren bzw. Größe der Einheitszellen ist in den Figuren stark vergrößert dargestellt. Insbesondere weist die Gitterstruktur 14 eine Porengröße bzw. eine Größe der Einheitszelle auf zwischen 20µm und 1500 µm und insbesondere zwischen 100 µm und 1000 µm.

Weiterhin weisen die Poren bzw. die Einheitszellen Wandstärken bzw. Strukturelemente wie beispielsweise Stützstreben, Verbindungsstreben oder dergleichen auf mit einer Größe von zwischen 0.5 µm und 50 µm und insbesondere zwischen 0.5 µm und 10 µm. Insbesondere entspricht die Größe der Wandstärke der Gitterstruktur 14 bzw. der Strukturelemente der Gitterstruktur 14 dem Voxel des 3D Laserschreibprozesses. Somit muss im Rahmen des 3D Laserschreibprozesses der Laser zur Aushärtung des Fotolacks lediglich einmal über das jeweilige Strukturelement der Gitterstruktur 14 verfahren werden zur vollständigen Ausbildung der Wand bzw. des Strukturelements der Gitterstruktur 14. Nachfolgend kann in einem optionalen Schritt Fotolack aus den Hohlräumen zwischen den optischen Elementen 12, 12' und 12" und der Gitterstruktur 14 herausgewaschen werden. Hierzu ist es nicht erforderlich, dass die Stützstruktur 20 Öffnungen aufweist, welche eingeplant werden müssen. Vielmehr kann der Fotolack durch die offenen Poren bzw. Einheitszellen der Gitterstruktur 14 heraus geleitet werden.

Nachfolgend wird die Gitterstruktur 14 mit einem härtbaren Polymer 16 in Schritt S03 befüllt. Hierbei kann die Befüllung beispielsweise durch den Kapillareffekt erleichtert werden, welcher durch die geringen Strukturgrößen der Poren bzw. Einheitszellen innerhalb der Gitterstruktur 14 und der Oberflächenenergie des verwendeten flüssigen Materials erzeugt wird. In Figur 1B ist die teilweise Befüllung in der Gitterstruktur 14 gezeigt. In der Figur 1C ist die gesamte Gitterstruktur 14 mit dem härtbaren Polymer 16 befüllt. Im nachfolgenden Schritt S04 wird das härtbare Polymer in der Gitterstruktur 14 ausgehärtet und bildet somit die Stützstruktur 20 aus. Dabei kann das härtbare Polymer 16 intransparent sein und somit neben seiner Stützfunktion gleichzeitig als intransparente Hülse die optischen Elemente 12, 12', 12" umgeben. Weiterhin ist in den Figuren 1A-1C gezeigt, dass sich die Gitterstruktur 14 zwischen der Linse 12 und dem Prisma 12' in radialer Richtung erstreckt. Auch diese radiale Erstreckung der Gitterstruktur 14 wird durch das lichtundurchlässige, härtbare Polymer 16 befüllt und bildet nach dem Aushärten eine Blende 22 aus. Somit ist das zusätzliche Vorsehen von Kanälen oder Kavitäten innerhalb der Stützstruktur 20 zur Ausbildung von Blenden mittels eines intransparenten Polymers nicht erforderlich. Der Aufbau wird vereinfacht. Kanäle innerhalb der Stützstruktur 20 zum Leiten des härtbaren Polymers 16 müssen nicht im Design vorgesehen werden, sondern werden bereitgestellt durch die Vielzahl von miteinander verbundenen offenen Poren bzw. Einheitszellen.

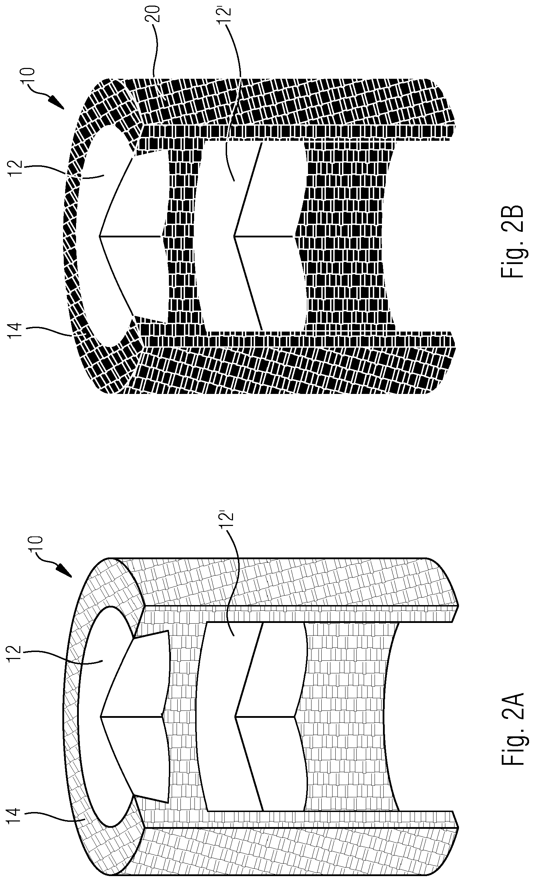

In den Figuren 2A, 2B ist eine Mikrooptik gemäß der vorliegenden Erfindung in einer Schnittansicht dargestellt. Dabei sind die massiv ausgebildeten optischen Bauelemente 12, 12' zu sehen, welche durch einen Hohlraum voneinander getrennt sind. Elemente 12, 12' sind dabei von der Gitterstruktur 14 vollständig umgeben. Nach dem Erzeugen der Gitterstruktur 14 wird diese mit dem härtbaren Polymer 16 gefüllt und das härtbare Polymer wird ausgehärtet. Dabei kann das Aushärten beispielsweise erfolgen durch Trocknung, Wärme, UV oder das härtbare Polymer kann ausgebildet sein als 2-Komponenten-Polymer, mit einem Aktivator, sodass das härtbare Polymer durch den Aktivator aushärtet.

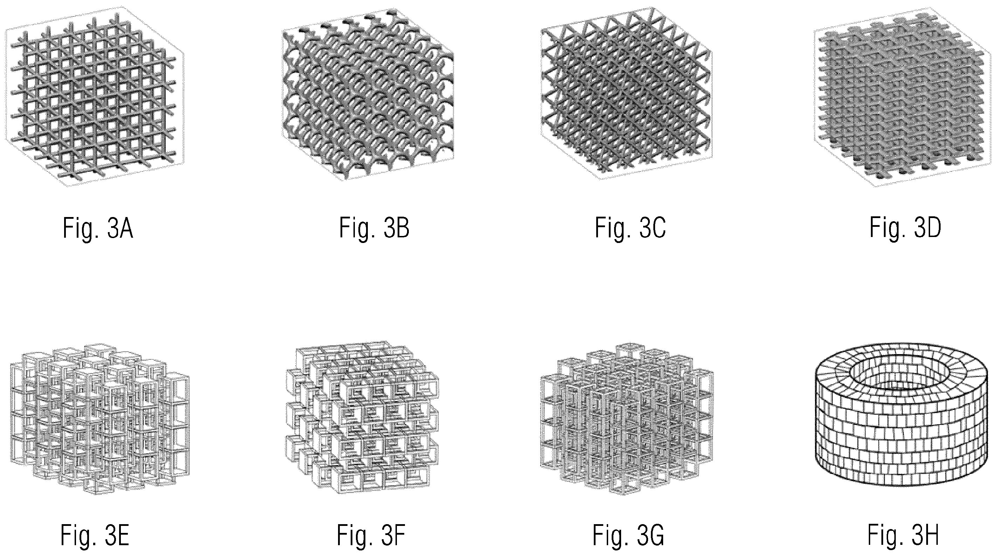

Nachfolgend wird Bezug genommen auf die Figuren 3A-3H, welche Beispiele für die Gitterstruktur 14 bzw. Ausschnitte der Gitterstruktur zeigen. Insbesondere weisen die Ausschnitte der Figuren 3A-3G Kantenlängen auf von zwischen 20 µm und 100 µm, insbesondere zwischen 20µm und 50 µm. So können die Einheitszellen regelmäßig angeordnet sein und insbesondere miteinander verschachtelt sein, wie in den Figuren 3E-3G gezeigt. Weiterhin können die Einheitszellen kubisch ausgebildet sein, wie gezeigt in den Figuren 3A, 3D-3G, rund wie in der Figur 3B oder tetraedrisch wie in der Figur 3C. Weitere Formen der Einheitszelle können ebenso vorgesehen sein. Insbesondere weist die Gitterstruktur einen geringen Volumenfüllfaktor auf. Hierdurch kann die Schreibzeit für die Erzeugung der Gitterstruktur 14 reduziert werden und gleichzeitig der erforderliche Materialaufwand reduziert werden, wodurch Kosten gespart werden können. Weiterhin kann die Gitterstruktur als spezielles Gitter erzeugt werden, wie beispielsweise in der Figur 3B als Gyroid.

Während in den Figuren 3A-3G die Einheitszellen bzw. Poren kartesisch angeordnet sind, ist in der Figur 3H schematisch dargestellt, dass die Einheitszellen/Poren auch radial angeordnet werden können und insbesondere radial angeordnet werden können um eine Mittelachse der Mikrooptik, welche unter Umständen mit der optischen Achse der Mikrooptik zusammenfällt.

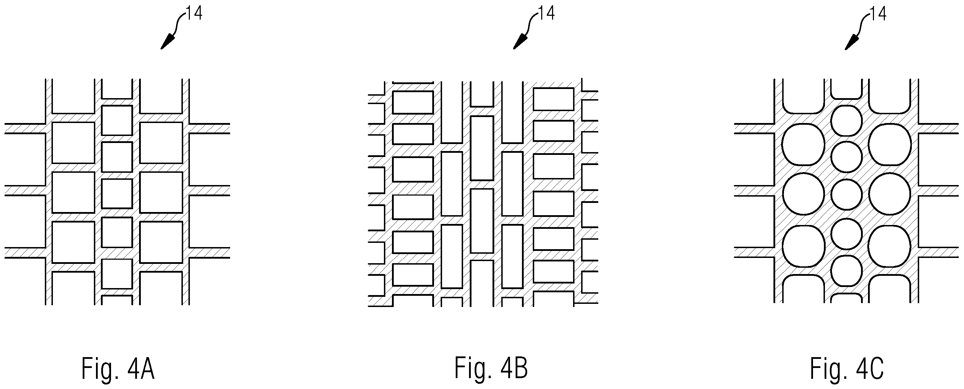

Im Folgenden wird Bezug genommen auf die Figuren 4A-4C, welche stark vereinfachte eine auf die Ebene reduzierte Darstellung der Einheitszellen bzw. Poren darstellen. Hierbei ist in den Figuren 4A bis 4C gezeigt, dass unterschiedliche Einheitszellen verwendet werden können zur Anpassung der geometrischen Ausbildung der Gitterstruktur 14. Hierdurch können einerseits die Fließeigenschaften des einzufüllenden härtenden Polymers 16 beeinflusst werden. Gleichzeitig kann die Stabilität der Stützstruktur in einzelne Richtungen verstärkt werden. Dabei ist in den Figuren 4A gezeigt, dass die Einheitszelle quadratisch ausgebildet ist, in der Figur 4B ist gezeigt, dass die Einheitszelle quaderförmig ausgebildet ist und in der Figur 4C sind die Einheitszellen rund oder abgerundet ausgebildet.

Auch wenn in den Figuren 3A-3H sowie 4A-4C konkrete Beispiele für die Einheitszellen bzw. Poren der Gitterstruktur 14 dargestellt sind, so ist die vorliegende Erfindung jedoch nicht beschränkt auf eine bestimmte Form der Einheitszellen und Poren der Gitterstruktur 14, sondern von der vorliegenden Erfindung wird eine große Bandbreite an Möglichkeiten zur Ausgestaltung der konkreten Gitterstruktur 14 mitumfasst. Insbesondere weisen diese Gitterstrukturen 14 offenen Poren oder Einheitszellen auf zur Weiterleitung des einzufüllenden härtbaren Polymers 16, sowie einen geringen Füllfaktor. Insbesondere beträgt der Füllfaktor weniger als 0.5, vorzugsweise weniger als 0.2 und besonders bevorzugt weniger als 0.1.

Somit ist eine Mikrooptik geschaffen mit einer vielseitigen Stützstruktur, wobei die Stützstruktur besonders schnell erzeugt werden kann und eine Gitterstruktur und ein eingefülltes härtbares Polymer aufweist. Das Vorsehen spezielle Kanäle und Öffnungen zum Auswaschen des Fotolacks, welcher zur Erzeugung der optischen Bauelemente bzw. der Gitterstruktur erforderlich sind, ist nicht erforderlich. Ebenso müssen keine Kanäle oder Öffnungen vorgesehen werden zur Aufnahme des härtbaren Polymers. Beide Funktionen werden durch die Gitterstruktur 14 bereitgestellt. Auch ist somit eine Anpassung der Stützstruktur bei Änderung der Mikrooptik nicht erforderlich, sodass das Design der Stützstruktur besonders einfach erfolgen kann, wodurch weitere Kosten gespart werden können.

## Patentansprüche

1. Verfahren zur Herstellung einer Mikrooptik mit den Schritten:
Erzeugen ein oder mehrere optischer Bauelemente,
Erzeugen einer das eine oder die mehreren optischen Bauelemente zumindest teilweise umgebende Gitterstruktur einer Stützstruktur,
Füllen der Gitterstruktur mit einem härtbaren Polymer und
Aushärten des Polymers in der Gitterstruktur zur Erzeugung der Stützstruktur.

2. Verfahren nach Anspruch 1, **dadurch gekennzeichnet, dass** die Gitterstruktur erzeugt wird mittels 3D-Laser-Schreiben.

3. Verfahren nach Anspruch 1 oder 2, **dadurch gekennzeichnet, dass** die Gitterstruktur eine Vielzahl miteinander verbundener offener Poren oder Einheitszellen aufweist.

4. Verfahren nach einem der Ansprüche 1 bis 3, **dadurch gekennzeichnet, dass** die Gitterstruktur regelmäßig oder stochastisch ausgebildet ist.

5. Verfahren nach einem der Ansprüche 1 bis 4, **dadurch gekennzeichnet, dass** die Gitterstruktur eine einheitliche Einheitszelle bzw. Porengeometrie aufweist oder eine insbesondere entlang einer Achse der Mikrooptik veränderliche Einheitszelle bzw. Porengeometrie aufweist.

6. Verfahren nach einem der Ansprüche 1 bis 5, **dadurch gekennzeichnet, dass** eine Wandstärke der Gitterstruktur zwischen 0.5µm und 50µm und insbesondere zwischen 0.5µm und 10µm beträgt.

7. Verfahren nach einem der Ansprüche 1 bis 6, **dadurch gekennzeichnet, dass** die Gitterstruktur einen Füllfaktor von weniger als 0.5 aufweist, insbesondere weniger als 0.3, bevorzugt weniger als 0.2 und besonders bevorzugt weniger als 0.1.

8. Verfahren nach einem der Ansprüche 1 bis 7, **dadurch gekennzeichnet, dass** eine Wandstärke der Gitterstruktur einem Voxel des 3D-Laser-Writing entspricht.

9. Verfahren nach einem der Ansprüche 1 bis 8, **dadurch gekennzeichnet, dass** eine Porengröße bzw. eine Größe der Einheitszelle zwischen 20µm und 1500µm und insbesondere zwischen 100µm und 1000µm entspricht.

10. Verfahren nach einem der Ansprüche 1 bis 9, **dadurch gekennzeichnet, dass** die Einheitszellen bzw. Poren der Gitterstruktur kartesisch oder radial angeordnet sind.

11. Verfahren nach einem der Ansprüche 1 bis 10, **dadurch gekennzeichnet, dass** das härtbare Polymer ist im Wesentlichen intransparent ist.

12. Verfahren nach einem der Ansprüche 1 bis 11, **dadurch gekennzeichnet, dass** die Stützstruktur das mindestens eine optische Element radial umgibt und sich in axialer Richtung erstreckt.

13. Verfahren nach einem der Ansprüche 1 bis 12, **dadurch gekennzeichnet, dass** die Stützstruktur sich radial erstreckt zur Ausbildung einer Blende.

14. Verfahren nach einem der Ansprüche 1 bis 13, **dadurch gekennzeichnet, dass** die Einheitszellen ineinander verschachtelt oder versetzt zueinander angeordnet sind.

15. Verfahren nach einem der Ansprüche 1 bis 14, **dadurch gekennzeichnet, dass** die Einheitszellen bzw. Poren kubisch, kreisförmig, gerundet oder polyedrisch sind.

16. Verfahren nach einem der Ansprüche 1 bis 15, wobei vor dem Befüllen mit dem aushärtbaren Polymer Metallpartikel in die Gitterstruktur eingefüllt werden oder das aushärtbare Polymer Metallpartikel enthält.

17. Mikrooptik mit mindestens einem optischen Element, wobei die Mikrooptik nach dem Verfahren gemäß einem der Ansprüche 1 bis 16 erzeugt ist.
